# FASCICULE DE BREVET EUROPEEN

(11) **EP 2 633 526 B1**
(45) Date de publication et mention de la délivrance du brevet: **07.01.2015**
(21) Numéro de dépôt: 11776001.7
(22) Date de dépôt: 28.10.2011
(51) Int. Cl.: G21C 3/10, G21C 21/00, B23K 9/028, B23K 37/053, B23Q 1/26

(54) **DISPOSITIF DE MAINTIEN AXIAL ET DE MISE EN ROTATION AUTOUR DE SON AXE D'UN ELEMENT DE FORME ALLONGÉE**
ANORDNUNG ZUR AXIALEN SICHERUNG EINES LÄNGLICHEN ELEMENTES UND ZUM ROTIEREN DESSELBEN UM SEINE ACHSE
DEVICE FOR AXIALLY SECURING AN ELONGATED ELEMENT AND ROTATING THE SAME ABOUT THE AXIS THEREOF

(30) Priorité: 29.10.2010 FR 1058948
(43) Date de publication de la demande: 04.09.2013
(73) Titulaire: Areva NC, 75009 Paris (FR)
(72) Inventeur: FISCHER, Marc, F-26200 Montélimar (FR); BOYER, Jean-Marc, F-30560 Saint Hilaire De Brethmas (FR)
(74) Mandataire: Ilgart, Jean-Christophe
(86) Numéro de dépôt international: PCT/EP2011/069019
(87) Numéro de publication internationale: WO 2012/056013

(56) Documents cités:
- FR-A1- 2 245 055
- FR-A1- 2 683 935
- JP-A- 2000 334 564
- US-A- 4 837 419
- US-A- 4 857 691
- US-A1- 2004 238 594

## Description

### DOMAINE TECHNIQUE ET ART ANTÉRIEUR

La présente invention se rapporte à un dispositif de maintien axial et de mise en rotation autour de son axe d'un élément de forme allongée. Par exemple, l'élément allongé peut comporter une gaine chargée de combustible nucléaire et un bouchon supérieur et le dispositif est associé à une chambre de soudage pour réaliser le soudage du bouchon supérieur sur la gaine formant ainsi un crayon de combustible nucléaire.

Le soudage du bouchon supérieur sur la gaine est réalisé au moyen d'une électrode disposée perpendiculairement à l'axe de la gaine dans le plan du plan de joint entre le bouchon et la gaine. Une grande précision est donc requise pour le positionnement de la gaine munie du bouchon supérieur pour être sûr de réaliser le soudage. En outre, l'électrode de soudage étant fixe, c'est l'ensemble gaine et bouchon supérieur qui est entraîné en rotation autour de l'axe de la gaine pour réaliser une soudure sur toute la périphérie du bouchon supérieur.

Par conséquent, un dispositif pour réaliser le soudage entre une gaine de combustible nucléaire et un bouchon comporte un dispositif assurant le maintien dans une position axiale donnée de l'ensemble gaine et bouchon supérieur et assurant la rotation de l'ensemble autour de l'axe de la gaine tout en conservant la position axiale donnée.

Le document FR 2 683 935 décrit un appareil de soudage pour des bouchons d'extrémité de barre de combustible. L'appareil comporte une pince de serrage montée à l'extrémité d'un arbre creux, la pince étant divisée radialement, et un élément de fermeture de la pince monté autour de l'arbre creux et de la pince mobile dans la direction axiale de l'arbre. La barre munie du bouchon est introduite dans l'arbre creux et dans la pince, l'élément de fermeture est déplacé axialement au moyen d'un piston, ce qui a pour effet de resserrer la pince sur la barre, la maintenant axialement. Des moyens pour mettre en rotation l'arbre creux sont prévus. Cet appareil comporte également une crémaillère pour positionner axialement la pince de serrage, un piston déplacé par un fluide pour déplacer la crémaillère et un mécanisme de pression pour presser l'extrémité de la barre munie du bouchon contre une butée dans la chambre de soudage.

Cet appareil est très complexe, comporte de nombreuses pièces en mouvement les unes par rapport aux autres et la mise en place de la barre avant le soudage comprend de nombreuse étapes.

Le document FR 2 245 055 décrit un appareil pour souder un bouchon sur une barre de combustible comportant une douille de serrage montée dans un porte-douille pour serrer la barre. Cette douille est serrée sur la barre au moyen de plusieurs vérins hydrauliques ou pneumatiques qui déplacent le porte-douille obligeant la douille à se refermer sur la barre. Les vérins sont disposés au niveau de l'entrée d'introduction de la barre dans l'appareil.

Cet appareil requiert plusieurs vérins, ce qui le rend encombrant. En outre, des problèmes d'étanchéité peuvent se poser proportionnellement aux nombres de vérins mis en oeuvre.

C'est par conséquent un but de la présente invention d'offrir un dispositif pour maintenir et mettre en rotation autour de son axe un élément de forme allongée de réalisation simple et robuste.

### EXPOSÉ DE L'INVENTION

Le but de la présente invention est atteint par un dispositif de maintien et de mise en rotation autour de son axe d'un élément de forme allongée comportant un logement d'axe longitudinal pour recevoir l'élément allongé, des moyens de serrage dudit élément allongé, lesdits moyens de serrage comportant une pince tendant à se refermer sur l'élément allongé par application d'un effort axial, ledit effort étant fourni par un actionneur linéaire et transmis à la pince via un élément poussoir. Ledit élément poussoir est, quant à lui, déplacé par l'actionneur linéaire au moyen d'un étrier articulé en rotation autour d'un axe perpendiculaire à l'axe du logement et connecté à l'actionneur linéaire à l'opposé de l'axe d'articulation par rapport à l'axe longitudinal. Ainsi lorsque l'actionneur linéaire est activé, l'étrier pivote autour de l'axe d'articulation, provoquant le déplacement du poussoir le long de l'axe longitudinal, ce qui provoque le serrage de la pince sur l'élément allongé. La pince est montée libre en rotation autour de l'axe longitudinal pour pouvoir mettre en rotation l'élément allongé tout en le maintenant serré.

Ainsi, puisque le dispositif ne comporte qu'un seul actionneur linéaire, les moyens de serrage sont simplifiés. Les problèmes d'étanchéité sont réduits. Par ailleurs, la commande est simplifiée puisqu'elle ne concerne qu'un seul actionneur linéaire.

La présente invention a alors pour objet un dispositif de maintien axial et de mise en rotation autour de son axe d'un élément allongé d'axe longitudinal, ledit dispositif d'axe longitudinal comportant :
- une pince formée par des moyens aptes à exercer des efforts de serrage radiaux sur la périphérie dudit élément allongé orienté vers l'axe longitudinal par rapprochement desdits moyens dudit axe longitudinal,
- un dispositif de serrage de la pince formés par des moyens pour provoquer le rapprochement de ladite pince, ledit dispositif de serrage comportant un poussoir pour appliquer un effort axial sur ladite pince, une contrebutée pour forcer ladite pince à se rapprocher de l'axe longitudinal sous l'effet de l'effort axial, un actionneur linéaire d'axe parallèle à l'axe longitudinal du dispositif, un étrier solidaire en translation dudit poussoir et mobile en rotation autour d'un premier axe orthogonal à l'axe longitudinal et non sécant avec celui-ci, ledit premier axe orthogonal étant fixe, ledit étrier étant articulé par rapport à l'actionneur linéaire autour d'un deuxième axe orthogonal parallèle au premier axe orthogonal situé à l'opposé du premier axe orthogonal par rapport à l'axe longitudinal, de sorte que l'actionneur linéaire provoque une rotation de l'étrier autour du premier axe orthogonal et des moyens pour commander l'actionneur linéaire en fonction de la position de l'étrier, ledit poussoir étant libre en rotation dans ledit étrier,
- des moyens pour entraîner en rotation la pince et ledit poussoir.

Le dispositif de maintien axial et de mise en rotation peut comporter :
- un arbre creux d'axe longitudinal dans lequel est monté libre en translation ledit poussoir, ledit poussoir étant solidaire en rotation dudit arbre
- des paliers dans lesquels est monté l'arbre,
- les moyens pour entraîner en rotation les moyens aptes à exercer des efforts de serrage radiaux sur la périphérie dudit élément allongé et ledit poussoir, entraînant directement en rotation ledit arbre.

Par exemple, les moyens pour entraîner en rotation comportent un moteur électrique, un premier pignon en prise avec le moteur électrique, une chaîne entourant ledit premier pignon et un deuxième pignon solidaire en rotation dudit arbre et coaxial audit arbre.

Les moyens de commande de l'actionneur peuvent comporter au moins un capteur pour détecter la position de l'étrier en position serrée. Par exemple, les moyens de commande comportent une pièce métallique solidaire en mouvement de l'étrier, et dans lequel ledit capteur est un capteur inductif, la détection de la présence de ladite pièce métallique par ledit capteur correspondant à une position serrée.

Le dispositif de maintien axial et de mise en rotation peut avantageusement comporter un deuxième capteur pour détecter la position desserrée.

Selon une caractéristique additionnelle lequel, l'actionneur linéaire peut être un vérin pneumatique, ledit dispositif comportant également un arbre de transmission d'effort axial reliant le vérin et l'étrier, une articulation entre ledit arbre de transmission d'effort axial et ledit étrier comprenant un cardan monté articulé sur l'étrier autour du deuxième axe orthogonal, ledit cardan étant traversé par ledit arbre de transmission d'effort axial, ledit arbre étant relié audit cardan.

Le dispositif de maintien axial et de mise en rotation peut avantageusement comporter des moyens élastiques montés en compression entre ledit cardan et une extrémité libre dudit arbre.

Le dispositif de maintien axial et de mise en rotation peut comporter des moyens de réglage de la charge desdits moyens élastiques.

Le dispositif de maintien axial et de mise en rotation peut également comporter des moyens de butée mécanique pour limiter le déplacement angulaire de l'étrier. Avantageusement, les moyens de butée mécanique comportent au moins une butée montée sur l'extrémité libre de l'arbre de transmission d'effort axial et une contrebutée fixe, ledit arbre de transmission d'effort axial traversant la contrebutée fixe, et ladite butée étant disposée de l'autre côté de la contrebutée par rapport à l'articulation entre l'étrier et l'arbre de transmission d'effort axial.

De plus, le dispositif de maintien axial et de mise en rotation peut comporter une deuxième butée sur l'arbre de transmission d'effort axial entre l'articulation et la contrebutée. La position le long de l'axe de l'une et/ou de l'autre butée est alors de préférence ajustable.

Selon une autre caractéristique additionnelle, l'étrier comporte un alésage réalisé entre les premier et deuxième axes orthogonaux, un moyeu monté articulé dans ledit alésage autour d'une axe parallèle aux premier et deuxième axes orthogonaux, un roulement monté dans ledit moyeu, le poussoir étant monté dans ledit roulement.

La présente invention a également pour objet une installation de soudage pour le soudage des bouchons supérieurs sur les crayons de combustible nucléaire comportant un dispositif de maintien axial et de mise en rotation selon l'invention et une chambre de soudage, les crayons formant les éléments allongés, ledit dispositif comportant un logement traversant d'axe longitudinal dans lequel le crayon est destiné à être maintenu axialement par serrage et à pivoter autour de son axe, ladite chambre de soudage étant disposée à une extrémité du passage traversant à l'opposé de l'extrémité d'introduction du crayon, l'extrémité du crayon munie du bouchon débouchant dudit passage dans une zone de soudage de ladite chambre de soudage, ladite chambre de soudage comportant des moyens de soudage du bouchon supérieur sur le crayon.

La chambre de soudage comporte avantageusement une butée pour le bouchon supérieur du crayon alignée avec l'axe longitudinal du dispositif.

La chambre de soudage peut comporter des moyens de mise au vide et d'injection d'un gaz inerte et d'analyse de l'atmosphère de ladite chambre, et un canal fluidique reliant les moyens de mise au vide et d'injection à la zone de soudage.

La butée est de préférence percée d'un canal longitudinal, le canal fluidique étant relié à la zone de soudage à travers le canal longitudinal de la butée. Le canal fluidique est par exemple formé par un tube solidaire en rotation de la butée, ledit tube étant monté dans des paliers, et la butée étant entraînée en rotation par le crayon.

L'installation de soudage peut comporter moyens pour visualiser la position des moyens de soudage par rapport à un plan de joint entre le bouchon supérieur et la gaine du crayon.

L'installation de soudage peut également comporter des moyens de contrôle pour autoriser ou non le soudage en fonction de la vitesse de rotation du crayon et/ou de la qualité de l'atmosphère et/ou du niveau de serrage et/ou et de la position des moyens de soudage par rapport au plan de joint.

La présente invention a également pour objet un procédé de soudage mettant en oeuvre l'installation selon l'invention comportant les étapes :
- insertion du crayon muni du bouchon supérieur dans le passage du dispositif jusqu'à ce que le bouchon supérieur vienne en appui contre la butée de la chambre de soudage,
- actionnement des moyens de serrage du crayon,
- mise en rotation du crayon,
- mise au vide de la zone de soudage,
- injection de gaz inerte,
- soudage.

De préférence, préalablement au soudage, la vitesse de rotation du crayon et/ou la qualité de l'atmosphère et/ou le niveau de serrage et/ou et la position des moyens de soudage par rapport au plan de joint sont vérifiés.

### BRÈVE DESCRIPTION DES DESSINS

La présente invention sera mieux comprise à l'aide de la description qui va suivre et des dessins en annexe, sur lesquels :
- la figure 1 est une vue en perspective de dessus d'un exemple de réalisation d'une installation de soudage d'un bouchon supérieur sur une gaine de combustible nucléaire selon la présente invention,
- la figure 2 est une vue de dessus de l'installation de soudage de la figure 1,
- la figure 3 est une vue en coupe suivant le plan A-A de la figure 2,
- la figure 4 est une vue de détail de la figure 3 au niveau d'un dispositif de maintien axial et de mise en rotation,
- la figure 5 est une vue en perspective de trois quart d'une partie du dispositif de maintien axial et de mise en rotation située à l'entrée dudit dispositif,
- la figure 6 est une vue en coupe longitudinale de la partie représentée sur le figure 5,
- la figure 7 est une vue en coupe partielle de la figure 6 le long d'un plan A-A,
- la figure 8 est une vue identique à celle de la figure 3, un crayon étant disposé dans l'installation,
- la figure 9 est une vue de côté du bouchon supérieur en position dans la chambre de soudage, l'électrode de soudage étant positionnée au droit du plan de joint entre le bouchon supérieur et la gaine,
- la figure 10 est une représentation schématique d'un crayon de combustible nucléaire muni de son bouchon supérieur et destiné à être soudé par l'installation de soudage de la figure 1,
- la figure 11 est une vue en perspective en éclaté d'éléments d'une variante des moyens de serrage du dispositif de maintien.

### EXPOSÉ DÉTAILLÉ DE MODES DE RÉALISATION PARTICULIERS

Le dispositif de maintien axial et de mise en rotation sera décrit dans le cadre d'une installation de soudage d'un bouchon supérieur sur une gaine de combustible nucléaire dans le domaine de la fabrication de crayons de combustible nucléaire. Cependant, le dispositif de maintien axial et de mise en rotation peut être mis en oeuvre dans tous les domaines dans lesquels un élément de forme allongée doit être maintenu par serrage et simultanément mis en rotation autour de son axe.

L'élément de forme allongée dans l'exemple qui va être décrit est un crayon de combustible nucléaire ; celui-ci comporte une gaine formée par un tube obturé à une extrémité et ouvert à l'autre, dans lequel est disposé du combustible nucléaire, par exemple sous forme de pastilles empilées ; le crayon comporte un bouchon obturant l'extrémité ouverte de la gaine, appelé bouchon supérieur. L'étanchéité entre le bouchon supérieur et la gaine est réalisé par soudage au niveau de la zone de raccord de forme circulaire entre la gaine et le bouchon supérieur. Le soudage est l'opération effectuée dans l'installation selon la présente invention. Le bouchon supérieur comporte un passage traversant qui est obturé ultérieurement après mise sous pression de l'intérieur du crayon, cette opération est appelé queusotage.

Dans la description qui va suivre, les termes "amont" et "aval" sont à considérer dans le sens d'introduction du crayon dans l'installation ; sur les dessins, il s'agit du sens de la gauche vers la droite.

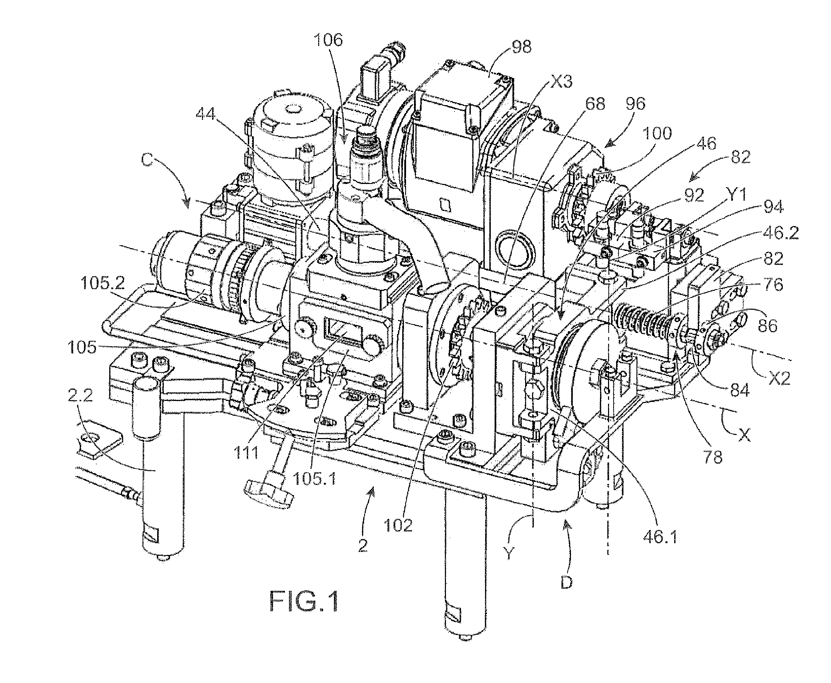

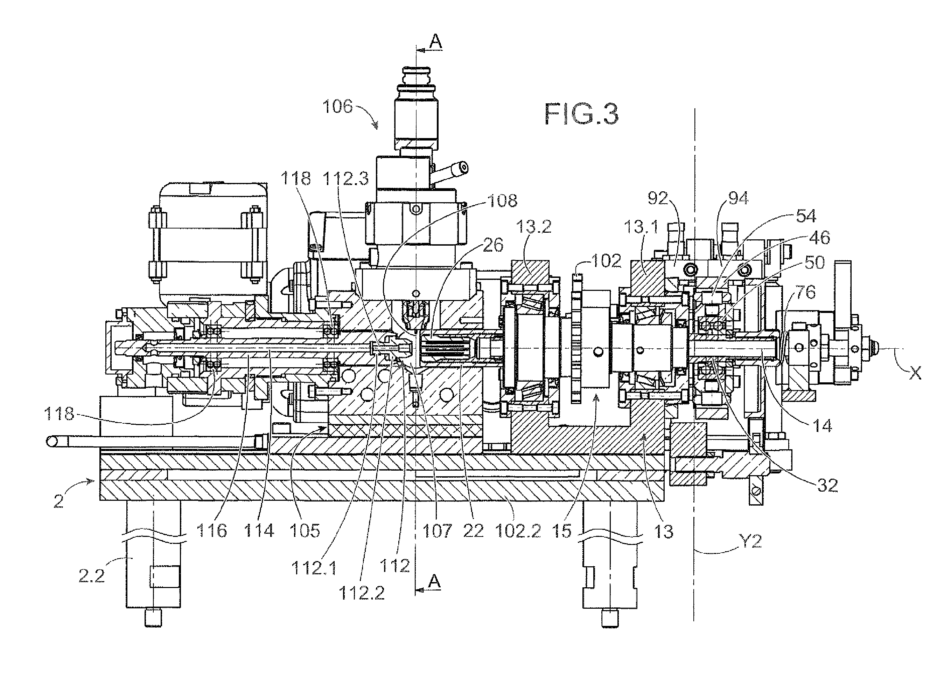

Sur les figures 1, 2 et 3, on peut voir un exemple d'installation de soudage selon la présente invention. Celle-ci comporte un dispositif D de maintien axial du crayon et de mise en rotation de celui autour de son axe et une chambre de soudage C. Le dispositif D de maintien axial du crayon et de mise en rotation de celui-ci autour de son axe sera désigné par la suite dispositif de maintien, à des fins de simplicité.

Le dispositif de maintien D et la chambre de soudage C sont disposés sur une table 2 munie d'un plateau 2.1 monté sur des pieds 2.2.

Le dispositif de maintien D et la chambre de soudage C sont alignés le long d'un axe longitudinal X et ménagent un passage pour un crayon de combustible en vue de son soudage, l'extrémité du crayon munie du bouchon supérieur traversant le dispositif de maintien D et débouchant dans la chambre de soudage C.

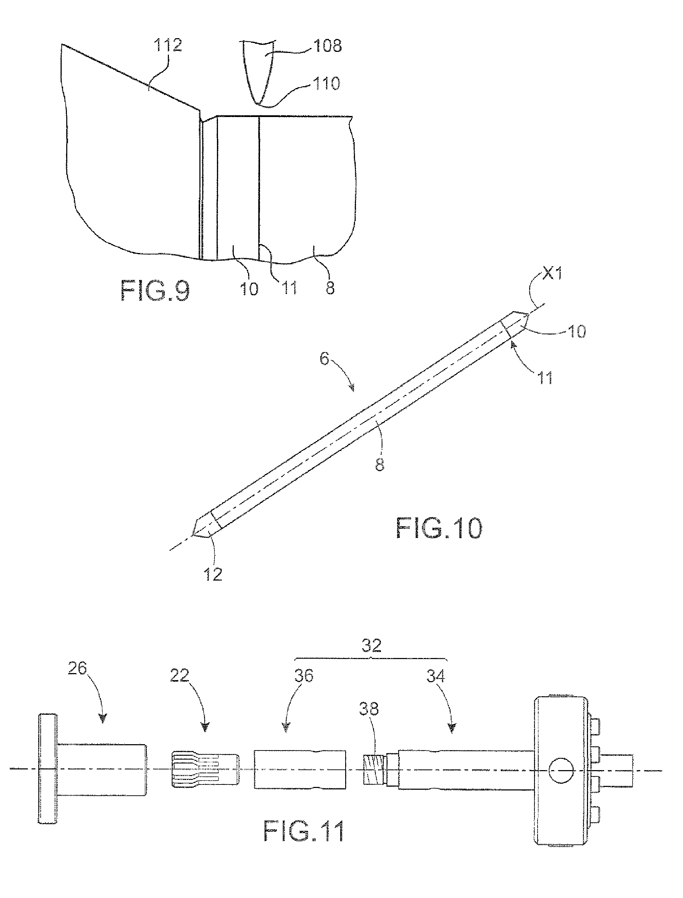

Sur la figure 10, on peut voir un crayon 6 destiné à être soudé par l'installation selon la présente invention. Le crayon 6 d'axe longitudinal X1 comporte une gaine 8 ouverte à une extrémité longitudinale et un bouchon supérieur 10. La gaine 8 est remplie de combustible avant la mise en place du bouchon. Le raccord 11 entre la gaine 8 et le bouchon 10, appelé plan de joint, est de forme circulaire d'axe X1. L'autre extrémité de la gaine 8 est obturée par un bouchon inférieur 12 qui a été soudé sur la gaine préalablement au remplissage avec le combustible nucléaire.

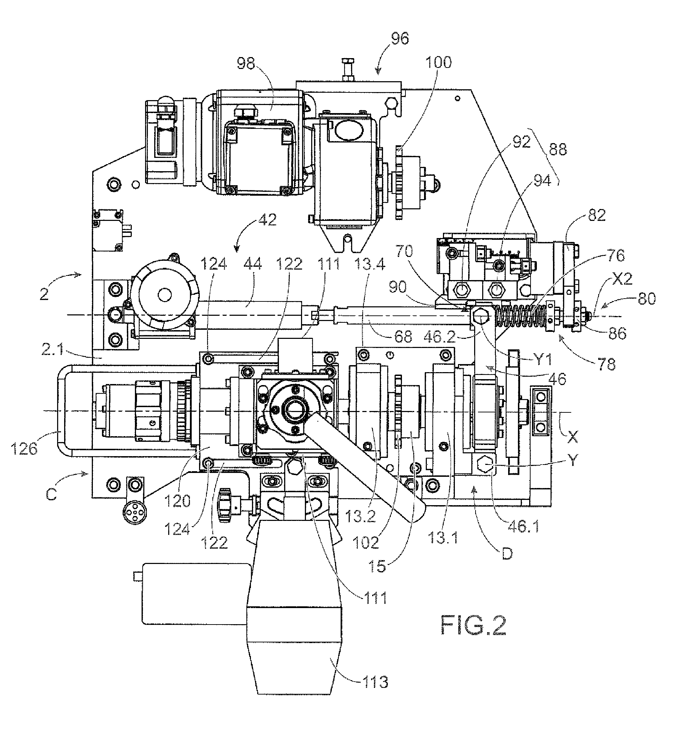

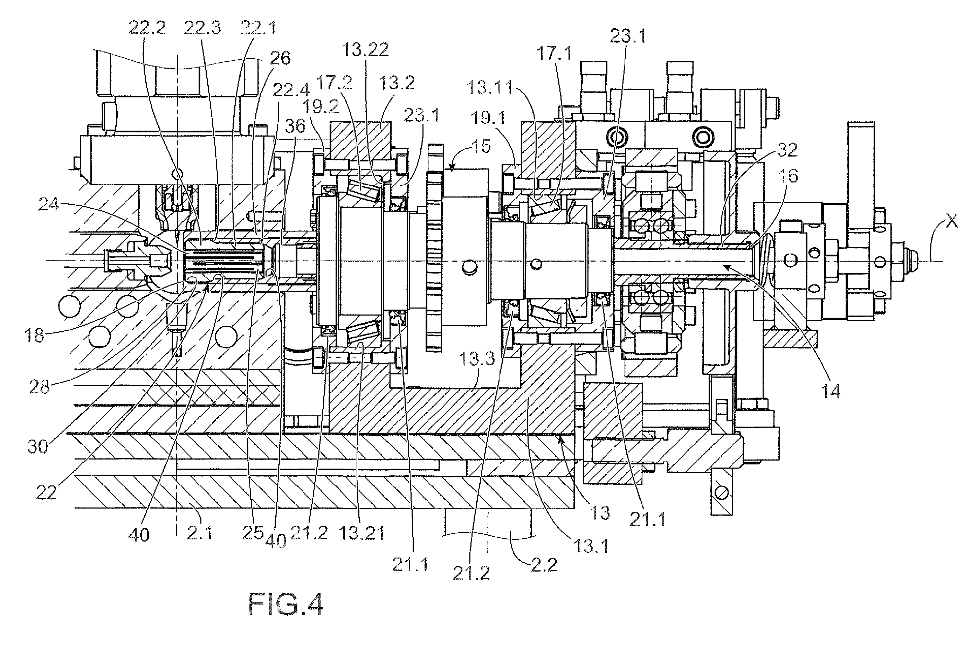

Sur la figure 4, on peut voir une vue en coupe longitudinale du dispositif de maintien D, celui-ci comporte un châssis 13 fixé sur le plateau 2.1 de la table 2. Dans l'exemple représenté, le châssis 13 comporte deux supports parallèles 13.1, 13.2 et perpendiculaires au plan de la table 2 et à l'axe longitudinal X et reliés par une traverse 13.3 fixée sur le plateau 2.1. Par exemple, la traverse 13.3 est fixée sur le plateau par des vis 13.4 (visibles sur la figure 2).

Les deux supports 13.1, 13.2 comportent chacun un passage traversant circulaire 13.11, 13.21 d'axe longitudinal X, ces passages 13.11, 13.21 sont destinés à former, avec des roulements, des paliers pour un arbre qui sera décrit ultérieurement.

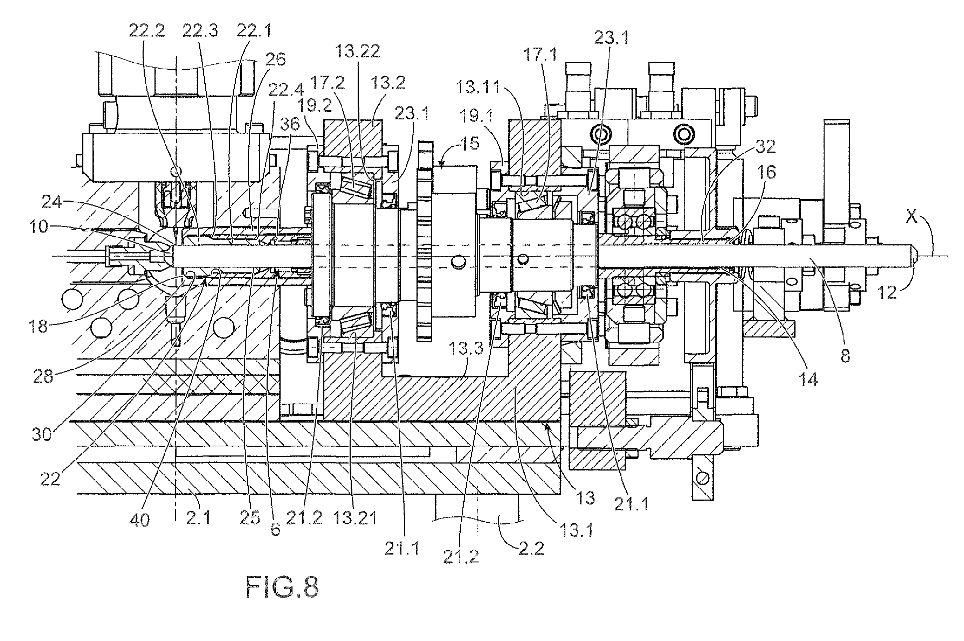

Le dispositif comporte un passage traversant 14 d'axe longitudinal X pour recevoir le crayon 6. Le passage 14 comporte une première extrémité longitudinale 16 ouverte pour l'introduction du crayon 6 dans le logement 14 et une deuxième extrémité longitudinale 18 débouchant dans la chambre de soudage C. Ce passage 14 est particulièrement visible sur la figure 8, un crayon 6 étant disposé dans celui-ci.

Le dispositif de maintien D comporte des moyens de serrage du crayon 6, plus particulièrement de la gaine 8. Le crayon 6, lorsqu'il est monté dans le dispositif de maintien D, est logé dans les moyens de serrage. En outre, le dispositif de maintien D est destiné à permettre la rotation du crayon 6 autour de l'axe longitudinal X ; pour cela, les moyens de serrage sont montés aptes à pivoter autour de l'axe longitudinal X, entraînant avec eux le crayon autour de l'axe longitudinal X.

A cet effet, le dispositif de maintien D comporte un arbre 15 monté pivotant dans les passages 13.11, 13.21 des supports 13.1, 13.2. L'arbre comporte un passage traversant 15.1 d'axe longitudinal X pour recevoir une partie longitudinale des moyens de serrage.

L'arbre 15 est monté dans des roulements 17.1, 17.2 montés respectivement dans les passages 13.11, 13.21 des supports 13.1, 13.2.

Dans l'exemple représenté, les roulements 17.1, 17.2 sont des roulements à rouleaux montés en X.

Dans l'exemple représenté, le roulement 17.1 est maintenu dans le support 13.1 entre deux flasques de serrage 19.1 et 23.1, fixés aux supports par des vis. Le roulement 17.2 est monté fixe dans le support 13.2 entre un épaulement 13.22 dans l'ouverture 13.21 et un flasque de serrage 19.2. Le flasque 19.2 est par exemple maintenu par des vis dans le support.

D'autres montages sont envisageables.

L'arbre 15 est apte à pivoter de manière étanche ; pour cela, des moyens d'étanchéité 21.1, 21.2, par exemple du type joint à lèvre, sont montés autour de l'arbre en amont et en aval des roulements 17.1, 17.2 dans le sens d'introduction du crayon dans le passage 14. Les joints amont 21.1 sont logés dans des flasques 23.1, 23.2 fixés sur les supports 13.1, 13.2 à l'opposé des flasques de serrages 19.1, 19.2 des roulements. Les joints aval 21.2 sont logés dans les flasques de serrages 19.1, 19.2. Ces joints permettent d'éviter toute fuite de corps gras, type huile ou graisse, contenu dans les roulements vers le crayon.

L'arbre est de préférence formé de plusieurs pièces coaxiales fixes les unes par rapport aux autres.

Les moyens de serrage sont solidaires en rotation de l'arbre 15.

Les moyens de serrage du crayon s'étendent de l'extrémité d'entrée 16 du dispositif de maintien D à l'extrémité de sortie 18. Ils comportent une douille 22 débouchant dans la chambre de soudage visible sur la figure 4. La douille 22 est découpée sur une partie de sa longueur formant des pétales 24 raccordés à une couronne 25, les pétales 24 étant destinés à être rapprochés radialement vers l'axe longitudinal X pour venir serrer la gaine 8. La surface extérieure de la douille 22 comporte une première portion 22.1 de plus petit diamètre orientée à l'opposé de la chambre de soudage C, et une deuxième portion de plus grand diamètre 22.2 orientée du côté de la chambre de soudage C, les deux portions étant raccordées par un épaulement conique 22.3. L'extrémité amont de la douille est également munie d'un épaulement conique 22.4.

Les moyens de serrage comportent également un serre-pince 26 formé d'un tube de diamètre intérieur supérieur au diamètre extérieur de la douille 22, et dans lequel la douille 22 est logée. Le diamètre intérieur du tube du serre-pince 26 est sensiblement constant sauf au niveau d'une extrémité longitudinale 28 orientée vers la chambre de soudage C, qui est munie d'un chanfrein intérieur 30 formant une portée conique orientée de sorte que les pétales 24 de la douille 22 se resserrent vers l'axe longitudinal, lorsque la douille 22 est pressée contre le chanfrein intérieur 30.

Sur la figure 4, les moyens de serrage permettent des soudages dits « pince rapprochée », la douille de serrage est par exemple située à environ 3 mm du plan de joint à souder.

Avec la variante représentée sur la figure 11, on peut réalise des soudages dits « pince éloignée »; la douille est par exemple située à environ 60mm du plan de joint à souder. Sur la figure 11, on peut voir une vue en éclaté en perspective de l'ensemble douille 22, serre-pince 26 et poussoir 32.

Les moyens de serrage 20 comportent également des moyens pour presser la douille 22 contre le chanfrein intérieur 30 du serre-pince 26. Ces moyens sont formés par un poussoir 32 s'étendant entre la douille et l'extrémité d'entrée.

Dans l'exemple représenté, le poussoir 32 comporte un arbre tubulaire 34 de diamètre intérieur suffisant pour permettre le passage du crayon 6 et un embout 36 monté à une extrémité longitudinale 38 de l'arbre 34 et en appui sur la douille 22.

L'embout 36 est creux pour laisser passer le crayon 6. L'embout 36 est par exemple vissé par une extrémité longitudinale sur l'extrémité longitudinale 38 de l'arbre 34 et comporte au niveau de l'autre extrémité longitudinale deux portées intérieures 40 entourant la périphérie extérieure de la portion de plus petit diamètre 22.1 de la douille 22 et en appui contre les épaulements coniques 22.3, 22.4.

Ainsi, lorsque le poussoir 32 est déplacé axialement en direction de la chambre de soudage C, l'embout poussoir 36 appuie sur les deux épaulements coniques 22.3, 22.4 de la douille présents à l'intérieur de l'embout 36, qui sont eux-mêmes en appui contre le chanfrein intérieur 30 du serre-pince 26, provoquant alors un rapprochement des pétales en direction de l'axe longitudinal X et un serrage de la gaine 8.

Le dispositif de maintien D comporte également des moyens de déplacement 42 selon l'axe longitudinal du poussoir 32. Les moyens de déplacements longitudinaux 42 comportent un actionneur linéaire 44 d'axe X2 parallèle à l'axe X, visible sur la figure 2, apte à exercer un effort parallèle à l'axe longitudinal, un étrier 46 entourant une extrémité amont 32.1 du poussoir 32. L'étrier 46 est monté par une première extrémité latérale 46.1 pivotant par rapport au châssis 13 autour d'un axe Y contenu dans un plan orthogonal à l'axe longitudinal X, l'axe Y n'étant pas sécant avec l'axe X. L'étrier 46 est en outre raccordé de manière pivotante à l'actionneur linéaire 44 autour d'un axe Y1 parallèle à l'axe Y par une deuxième extrémité latérale 46.2, de sorte qu'un déplacement de l'actionneur linéaire provoque un pivotement de l'étrier autour de l'axe Y.

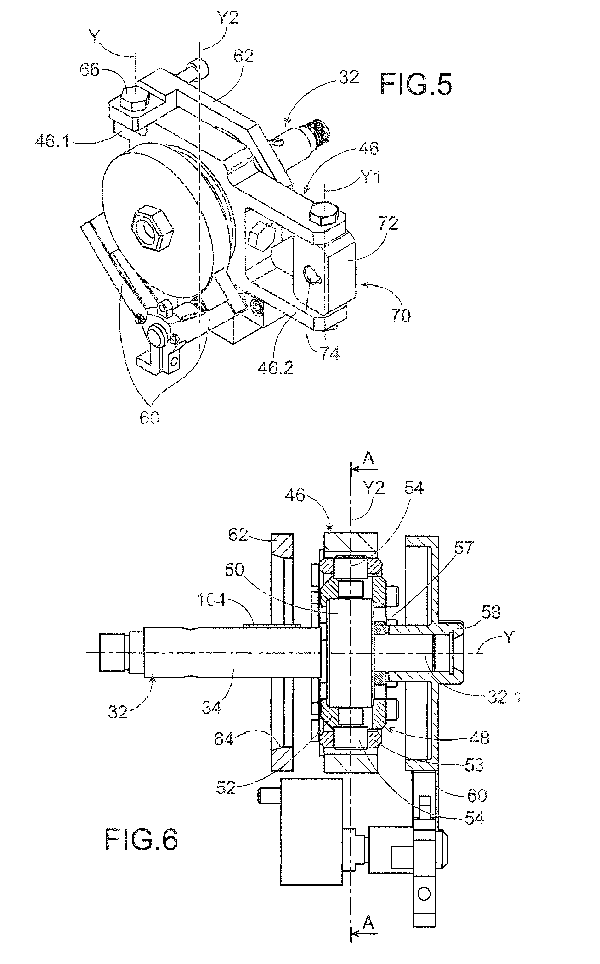

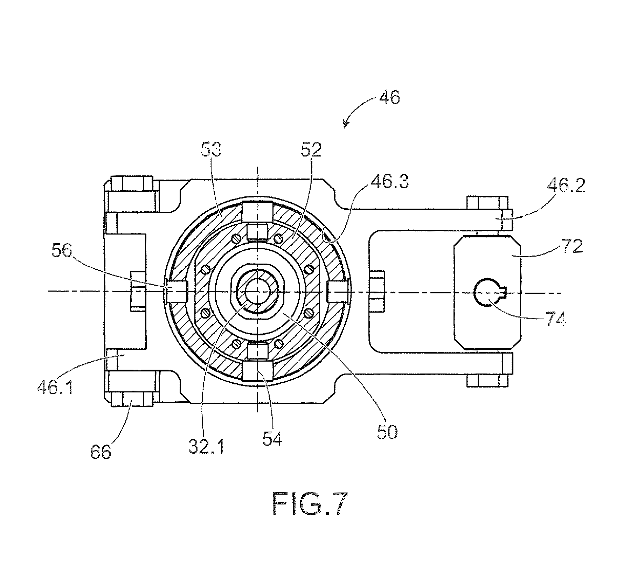

L'étrier 46 est solidaire en translation de l'extrémité amont du poussoir 32. Sur les figures 5 à 7, on peut voir un exemple de moyens 48 assurant cette solidarisation.

Les moyens 48 comportent un roulement 50 entourant l'extrémité amont du poussoir 32, un moyeu 52 dans lequel est monté de manière fixe le roulement 50, une couronne 53 entourant le moyeu 52 ; le moyeu 52 est articulé dans la couronne 53 autour d'un axe Y2 parallèle à l'axe Y. Par exemple, l'articulation est réalisée au moyen de vis 54 traversant la couronne 53.

La couronne 53 est elle-même montée de manière fixe dans un alésage 46.3 de l'étrier 46 au moyen de deux vis 56. Dans l'exemple représenté, les deux vis 56 sont diamétralement opposées selon un axe perpendiculaire à l'axe Y2. Cette réalisation est particulièrement avantageuse d'un point de vue de la maintenance, puisque l'ensemble moyeu 52, couronne 53 et vis 54 est une pièce de rechange du commerce et donc peut être facilement remplacée.

Cependant, une réalisation dans laquelle le moyeu 52 serait monté directement dans l'étrier 46 ne sort pas du cadre de la présente invention.

Dans l'exemple représenté, le roulement 50 est un roulement à billes à deux rangées. Un écrou 57, de type écrou à encoche, est monté sur le poussoir en amont du roulement 50 pour assurer l'immobilisation axiale du roulement 50 sur le poussoir 32.

Ainsi, lorsque l'actionneur linéaire 44 fait pivoter l'étrier 46 autour de l'axe Y, le poussoir 32 est déplacé le long de l'axe X tout en pouvant pivoter autour de l'axe X.

Un disque écrou 58 est fixé sur la portion de l'extrémité amont 32.1 du poussoir 32 faisant saillie du roulement 50. Le disque écrou 58 est vissé sur cette portion et recouvre les moyens 48.

Des balais frotteurs 60 sont prévus sous le disque écrou 58 et en contact avec la périphérie de celui-ci. Les balais frotteurs 60 sont au nombre de deux disposés en V et fixés sur le châssis. Le disque écrou 58 et les deux balais frotteurs 60 assurent la conduction de la source de courant jusqu'au crayon pour réaliser le soudage.

Nous allons maintenant décrire en détail le montage de l'étrier 46.

L'étrier 46 est articulé autour de l'axe Y sur une plaque de montage 62 fixée sur la face amont du support 13.1, la plaque de montage 62 est percée d'une ouverture 64 de sorte à être montée autour de l'arbre 15.

Un axe 66 solidarise en rotation la plaque de montage 66 et l'extrémité latérale 46.1 de l'étrier.

L'actionneur linéaire 44 est monté sur la table 2 le long de la chambre de soudage C. l'actionneur linéaire est par exemple un vérin de type électrique. De préférence, il s'agit d'un vérin pneumatique qui offre une meilleure maîtrise de l'effort de serrage et la suppression de tout risque de serrage excessif risquant de provoquer l'endommagement du crayon, voire du dispositif D.

Le vérin 44 est connecté à l'étrier via un arbre de transmission 68 et une articulation 70.

L'articulation 70 comporte un cardan 72 articulé sur l'étrier 46 autour de l'axe Y1 et un alésage 74 pour le passage de l'arbre 68.

De manière avantageuse, l'arbre 68 n'est pas connecté directement à l'étrier par le cardan mais par l'intermédiaire d'un ressort hélicoïdal 76 monté en compression entre le cardan 72 et une butée 78 montée sur l'arbre 68. De préférence, la butée 78 est déplaçable le long de l'arbre 68 pour ajuster la charge du ressort 76. La butée 78 est par exemple formée d'une molette et d'un écrou. La mise en oeuvre d'un ressort permet de maintenir un effort de serrage constant. En effet, la charge du ressort est tarée de sorte qu'au-delà d'une certaine course, ce soit le ressort qui se comprime, l'étrier ne pivotant plus. Des moyens d'arrêt en rotation de l'arbre 68 dans le cardan 72 sont prévus, dans l'exemple représenté il s'agit d'une clavette. En outre de manière très avantageuse, des moyens de butée mécanique 80 sont prévus pour limiter le déplacement axial de l'arbre 68 et de fait, le pivotement de l'étrier 48 et le déplacement axial du poussoir 32.

Dans l'exemple représenté, les moyens de butée mécanique 80 comportent une plaque 82 munie d'une encoche 84, fixée sur le plateau en amont de l'étrier 48, l'extrémité amont de l'arbre 68 étant reçue dans l'encoche 84 et une butée 86 étant montée sur l'arbre en amont de la plaque 82 de sorte que la course axiale de l'arbre en direction de la chambre de soudage C soit limitée. La butée 86 est également avantageusement ajustable en position le long de l'arbre 68 et est formée par un écrou et une molette.

De manière avantageuse, il est prévu, des moyens pour détecter l'état du dispositif D, i.e. l'état serré ou l'état desserré des moyens de serrage. Dans l'exemple représenté, ces moyens de détection 88 comportent un élément 90 solidaire en mouvement de l'étrier 46, appelé drapeau, en matériau métallique et deux capteurs inductifs 92,94 disposés latéralement par rapport au drapeau 90. La position de l'un des capteurs 92 correspond à la position que doit avoir le drapeau lorsque les moyens de serrage sont dans un état serré, et la position de l'autre capteur 94 correspond à celle que doit avoir le drapeau lorsque les moyens de serrage sont dans un état ouvert.

Le drapeau 90a est disposé à une distance telle des capteurs 92 et 94 qu'il est le seul à être détecté par rapport aux autres pièces métalliques du dispositif.

De préférence, le drapeau 90 est fixé sur l'arbre 68, celui-ci ayant un mouvement purement axial, comparativement à l'étrier 46. Le premier capteur 92 est dans une position aval par rapport au deuxième capteur 94.

Il est bien entendu que le type de capteur n'est en aucun cas limitatif, il pourrait s'agir de capteurs optiques ou autres. Le drapeau pourrait être fixé sur une autre pièce représentative de la position de l'étrier, par exemple l'étrier lui-même.

En variante, on pourrait prévoir un capteur de pression au niveau des moyens de butée mécanique 80.

En fonction de la pression mesurée, il serait considéré que le crayon est serré ou non.

Dans une autre variante, on pourrait ne prévoir qu'un capteur détectant l'état serré des moyens de serrage, l'état desserré étant par exemple détecté par un capteur de contact au niveau de la butée mécanique sur la plaque 82. Les capteurs 92, 94 sont reliés à la commande du vérin 44, la détection du drapeau provoquant l'arrêt du vérin 44.

De manière très avantageuse, des moyens de réglage de la position axiale des capteurs 92, 94 le long de l'arbre sont prévus de sorte à assurer une très grande précision de positionnement des capteurs et de fait une très grande précision dans la commande de l'actionneur. Ces moyens peuvent permettre un réglage micrométrique de la position axiale des capteurs. Par exemple, une règle graduée (non représentée) est fixée sur la table le long des supports de capteurs dont la position est modifiable le long de cette règle.

Le dispositif comporte également des moyens d'entraînement 96 en rotation du crayon autour de l'axe X.

Les moyens 96 sont disposés latéralement le long de l'arbre et du vérin, ils présentent un axe X3 parallèle à l'axe longitudinal X. Dans l'exemple représenté, les moyens 96 comportent un moteur 98, un pignon 100 en prise avec l'arbre du moteur 98, un pignon 102 sur l'arbre 15 et une chaîne (non représentée) reliant les deux pignons 100 et 102. Dans l'exemple représenté, le pignon 102 forme une portion de la périphérie de l'arbre 15, située entre les deux supports 13.1, 13.2.

Le poussoir 32 est solidaire en rotation de l'arbre 15. Dans l'exemple représenté, la solidarisation est réalisée au moyen d'une clavette 104 visible sur la figure 6 portée par le poussoir 32 et pénétrant dans une rainure (non visible) pratiquée dans la paroi du passage de l'arbre 15. On pourrait prévoir d'autres moyens pour immobiliser en rotation l'arbre 15 et le poussoir 12. Les dimensions de la clavette et de la rainure sont choisies pour permettre au poussoir d'avoir une course axiale suffisante pour provoquer une fermeture de la douille 22.

On pourrait prévoir des poulies et une courroie pour transmettre la rotation du moteur au crayon.

De préférence, un capot de protection (non représenté) recouvre les deux pignons et la chaîne.

Nous allons maintenant décrire la chambre de soudage C particulièrement visible sur les figures 1, 3 et 8.

La chambre de soudage C est disposée en aval du dispositif de maintien D.

La chambre C est formée d'un carter 105 délimitant un espace 107 confiné et en légère surpression par rapport à l'environnement extérieur, chambre dans laquelle a lieu le soudage sous atmosphère contrôlée.

La chambre de soudage C comporte des moyens de soudage 106 formés par une électrode 108 montée à travers le carter 105 et disposée perpendiculairement à l'axe longitudinal. Sur la figure 9, on peut voir la pointe 110 de l'électrode située axialement au droit du plan de joint 11 entre le bouchon supérieur 10 et la gaine 8, et transversalement au plus près de la gaine 8. Le carter 105 comporte des fenêtres latérales étanches 111 prévues dans les deux parois latérales de la chambre de soudage (figure 1) au niveau de l'électrode pour pouvoir visualiser la position du plan de joint 11 par rapport à l'électrode 108. Sur la figure 2, on peut voir une source lumineuse 113 pour éclairer le plan de joint, une caméra (non représentée) est également prévue devant la fenêtre 111 opposée.

En outre, la chambre de soudage C comporte des moyens pour positionner le plan de joint 11 du crayon au droit de l'électrode 108. Dans l'exemple représenté, ces moyens sont formés par une butée 112 pour le bouchon supérieur 10 dont la position axiale est réglable en fonction des dimensions du bouchon, plus particulièrement de sa longueur. En outre, la butée 112 peut être remplacée en fonction de la taille du bouchon supérieur 10.

La butée 112 est réglée de sorte que le plan de joint 11 soit situé directement au droit de l'électrode 108 lorsque le crayon 6 vient en appui contre la butée 112. La position transversale de l'électrode 108 est réglée en faisant pénétrer plus ou moins l'électrode 108 dans la chambre de soudage C.

La chambre de soudage C comporte des moyens pour contrôler l'atmosphère dans la chambre et le crayon. Ces moyens comprennent des moyens d'aspiration pour réaliser le vide dans la chambre et dans le crayon afin de supprimer les traces d'oxygène, des moyens pour injecter un gaz inerte, comme l'hélium et des moyens pour analyser l'atmosphère et vérifier la présence d'oxygène.

Dans l'exemple représenté, la butée 112 est creuse et l'aspiration et l'inertage sont réalisés à travers la butée 112 et un canal 114 reliés aux moyens d'aspiration et d'inertage. Le canal 114 est réalisé dans un tube 116 d'axe longitudinal s'étendant de la butée vers une zone aval de la chambre de soudage C.

Dans l'exemple représenté, la butée 112 comporte une tige creuse 112.1 et une tête creuse 112.2 à travers laquelle un gaz peut circuler. La tête creuse 112.2 est telle qu'elle forme un logement pour une extrémité libre du bouchon supérieur 10. La tige creuse 112.1 est, quant à elle, munie d'un filetage 112.3 pour permettre son vissage dans le canal ; il est alors aisé de régler axialement la position de la butée 112 en vissant plus ou moins la tige 112.1 dans le tube 116.

De préférence, la butée 112 est entraînée en rotation par le crayon 6 autour de l'axe X, évitant de marquer le bouchon par un déplacement relatif entre le bouchon et la butée. Le tube 116 est lui aussi mis en rotation, par exemple il est porté par une paire de roulements 118. On pourrait en variante prévoir d'entraîner le tube 116 et la butée 112 de manière indépendante, des moyens pour synchroniser les moyens d'entraînement 96 et ceux du tube 116 et de la butée 112 seraient alors prévus.

Dans l'exemple représenté figure 8, le carter 105 est formé par une première partie 105.1 portant les moyens de soudage 106 et une deuxième partie 105.2 dans laquelle s'étend le tube fluidique 116, la deuxième partie 105.1 étant par exemple vissée sur la première partie de manière étanche.

De manière très avantageuse, la chambre de soudage C peut être déplacée axialement par rapport au dispositif de maintien D de sorte à rendre accessible l'extrémité aval du dispositif D par laquelle sort le bouchon supérieur 10 du crayon 6, pour l'entretien du dispositif D et de la chambre de soudage C.

Dans l'exemple représenté, le carter 105 comporte une semelle 120 munie de deux rainures traversantes 122 parallèles à l'axe longitudinal X, traversées par des vis 124 vissées dans le plateau 2.1 de la table 2. Lorsque les vis 124 sont desserrées, la semelle 120 peut coulisser le long de l'axe longitudinal X ; lorsque les vis 124 sont serrées, la semelle 120 est immobilisée axialement. Une poignée 126 est avantageusement prévue pour déplacer la chambre de soudage C.

Nous allons maintenant expliquer le fonctionnement de l'installation selon la présente invention.

Il est à noter que, dans l'application au soudage de crayons de combustible nucléaire, l'installation est disposée dans une boîte à gant, puisque le crayon contenant du combustible nucléaire est, au début de l'opération, non scellé.

En position initiale, les moyens de serrage sont desserrés, le poussoir 32 est donc en position reculée, le drapeau 90 est en face du deuxième capteur 94.

Un crayon 6 muni de son bouchon supérieur 10 est introduit dans le passage 14 par l'entrée 16, le bouchon supérieur 10 en premier. Le crayon 6 est déplacé le long de l'axe longitudinal X jusqu'à ce que le bouchon supérieur 10 débouche des moyens de serrage dans la chambre de soudage C et vienne en appui contre la butée 112.

L'insertion et le retrait du crayon 6 se fait de préférence de manière automatique.Les moyens de serrage sont alors activés.

Pour cela, le vérin 44 est actionné, provoquant un déplacement de l'arbre de transmission 68 du vérin 44 vers l'aval, l'étrier 46 pivote alors autour de l'axe Y dans le sens antihoraire, ce qui provoque un coulissement du poussoir 32 dans l'arbre 15 et dans le serre-pince 26, qui appuie la douille 22 contre le chanfrein intérieur 30, ce qui a pour effet de resserrer les pétales 24 vers l'axe longitudinal X contre la gaine 8 du crayon 6. Le serrage est un serrage trois points, aux deux extrémités de la douille et au niveau de l'épaulement 22.3. Le vérin 44 est arrêté lorsque le drapeau 90 se trouve devant le premier capteur 92.

De préférence, le retreint subit par le crayon est vérifié. Pour cela, des mesures de longueur du crayon avant et après le soudage sont réalisés. Si la différence de longueur est hors d'un intervalle donné, il ya un problème au niveau du serrage.

Le crayon 6 est alors immobilisé axialement dans le dispositif D et dans la chambre de soudage C.

La position relative du plan de joint 11 et de l'électrode 108 est de préférence vérifiée par la caméra. Si cette position relative n'est pas satisfaisante le crayon 6 est déplacé.

Lorsque le plan de joint 11 est correctement positionné par rapport à l'électrode 108, le moteur électrique 98 est activé pour entraîner en rotation l'arbre 15 autour de l'axe longitudinal X, entraînant également les moyens de serrage dans lesquels est immobilisé le crayon 6 ; celui-ci tourne alors autour de l'axe longitudinal X. Simultanément, on réalise le vide dans la chambre de soudage C et dans le crayon à travers la butée 112. Il est rappelé que le bouchon supérieur comporte un piquage, ainsi même en présence du bouchon supérieur 10, l'intérieur du crayon est accessible de manière fluidique. Ceci permet d'extraire l'oxygène restant dans la chambre de soudage C et au niveau du plan du joint 11, et qui pourrait être défavorable à la réalisation de la soudure.

Ensuite on fait circuler un gaz inerte dans la chambre de soudage C, et dans le crayon 6. Une analyse de celui-ci est effectuée pour s'assurer que la concentration en oxygène est inférieure à un seuil donné.

Lorsque la concentration en oxygène est suffisamment faible et lorsque la vitesse du crayon est conforme, les moyens de soudage sont activés. Une soudure est alors formée au niveau du plan de joint 11 entre le bouchon supérieur 10 et la gaine 8.

Lorsque la soudure a été réalisée sur toute la périphérie du crayon 6, les moyens de soudage sont arrêtés, la rotation du crayon 6 est arrêtée.

Le vérin 44 est actionné de sorte que l'arbre de transmission 68 se déplace vers l'amont et provoque une rotation de l'étrier 46 dans le sens horaire. Le vérin 44 est arrêté lorsque le drapeau 90 est en face du deuxième capteur 94. Le poussoir 32 est alors reculé, libérant les pétales de la douille 22 qui s'écartent du crayon 6, celui-ci est alors libéré.

Le crayon est alors déchargé de l'installation. Il est ensuite amené à un poste de queusotage.

L'installation selon la présente invention, en particulier le dispositif de maintien D, est de réalisation simple et robuste et est de manipulation simple. En outre, il assure une grande sécurité de fonctionnement à la fois vis-à-vis du crayon en évitant le marquage du crayon, et vis-à-vis de l'installation puisque les risques de détérioration accidentelle de l'installation sont évités.

En outre, l'installation est facilement adaptable à différentes tailles de crayons, plus particulièrement à différentes tailles de bouchons supérieurs de crayons.

De plus, le dispositif de maintien et donc l'installation présentent un encombrement axial réduit puisque le vérin est disposé latéralement par rapport à la chambre de soudage et non à l'extrémité du dispositif de maintien. Enfin, puisqu'un seul vérin est mis en oeuvre, l'encombrement transversal est limité.

## Revendications

1. Dispositif de maintien axial et de mise en rotation autour de son axe d'un élément allongé (6) d'axe longitudinal (X1), ledit dispositif d'axe longitudinal (X) comportant :
- des moyens (22) aptes à exercer des efforts de serrage radiaux sur la périphérie dudit élément allongé (6) orienté vers l'axe longitudinal (X) par rapprochement desdits moyens (22) dudit axe longitudinal (X),
- des moyens pour provoquer le rapprochement desdits moyens (22) aptes à exercer lesdits efforts de serrage radiaux, lesdits moyens comportant un poussoir (32) pour appliquer un effort axial sur lesdits moyens (22) aptes à exercer des efforts de serrage radiaux, une contrebutée (26) pour forcer lesdits moyens (22) aptes à exercer des efforts de serrage radiaux à se rapprocher de l'axe longitudinal (X) sous l'effet de l'effort axial, un actionneur linéaire (44) d'axe (X2) parallèle à l'axe longitudinal du dispositif (X), un étrier (46) solidaire en translation dudit poussoir (32) et mobile en rotation autour d'un premier axe (Y) orthogonal à l'axe longitudinal (X) et non sécant avec celui-ci, ledit premier axe orthogonal (Y) étant fixe, ledit étrier (46) étant articulé par rapport à l'actionneur linéaire (44) autour d'un deuxième axe orthogonal (Y1) parallèle au premier axe orthogonal (Y) situé à l'opposé du premier axe orthogonal (Y) par rapport à l'axe longitudinal (X), de sorte que l'actionneur linéaire (44) provoque une rotation de l'étrier (46) autour du premier axe orthogonal (Y) et des moyens pour commander l'actionneur linéaire en fonction de la position de l'étrier (46), ledit poussoir (32) étant libre en rotation dans ledit étrier (46),
- des moyens (96) pour entraîner en rotation les moyens (22) aptes à exercer des efforts de serrage radiaux sur la périphérie dudit élément allongé (6) et ledit poussoir (32).

2. Dispositif de maintien axial et de mise en rotation selon la revendication 1, comportant :
- un arbre creux (15) d'axe longitudinal (X) dans lequel est monté libre en translation ledit poussoir (32), ledit poussoir étant solidaire en rotation dudit arbre (15),
- des paliers dans lesquels est monté l'arbre (15),
- les moyens (96) pour entraîner en rotation les moyens (22) aptes à exercer des efforts de serrage radiaux sur la périphérie dudit élément allongé et ledit poussoir (32), entraînant directement en rotation ledit arbre (15).

3. Dispositif de maintien axial et de mise en rotation selon la revendication 1 ou 2, dans lequel les moyens de commande de l'actionneur comportent au moins un premier capteur (92, 94) pour détecter la position de l'étrier (46) en position serrée, et avantageusement un deuxième capteur (64) pour détecter la position desserrée.

4. Dispositif de maintien axial et de mise en rotation selon la revendication 3, dans lequel les moyens de commande comportent une pièce métallique (90) solidaire en mouvement de l'étrier (46), et dans lequel ledit capteur (92) est un capteur inductif (92), la détection de la présence de ladite pièce métallique (90) par ledit capteur correspondant à une position serrée.

5. Dispositif de maintien axial et de mise en rotation selon l'une des revendications 1 à 4, dans lequel l'actionneur linéaire (44) est un vérin pneumatique, ledit dispositif comportant également un arbre de transmission d'effort axial (68) reliant le vérin (44) et l'étrier (46), une articulation (70) entre ledit arbre de transmission d'effort axial (68) et ledit étrier (46) comprenant un cardan (72) monté articulé sur l'étrier (46) autour du deuxième axe orthogonal (Y1), ledit cardan (72) étant traversé par ledit arbre de transmission d'effort axial (68), ledit arbre (68) étant relié audit cardan (72).

6. Dispositif de maintien axial et de mise en rotation selon la revendication 5, comportant des moyens élastiques (76) montés en compression entre ledit cardan (72) et une extrémité libre dudit arbre (68) et avantageusement des moyens de réglage de la charge desdits moyens élastiques (76).

7. Dispositif de maintien axial et de mise en rotation selon l'une des revendications 1 à 6, comportant des moyens de butée mécanique (80) pour limiter le déplacement angulaire de l'étrier (46), les moyens de butée mécanique (80) comportant avantageusement au moins une butée (86) montée sur l'extrémité libre de l'arbre de transmission d'effort axial (68) et une contrebutée fixe (82), ledit arbre de transmission d'effort axial (68) traversant la contrebutée fixe (82), et ladite butée (86) étant disposée de l'autre côté de la contrebutée (82) par rapport à l'articulation (70) entre l'étrier (46) et l'arbre de transmission d'effort axial (68).

8. Dispositif de maintien axial et de mise en rotation selon la revendication 7, comportant une deuxième butée (78) sur l'arbre de transmission d'effort axial (68) entre l'articulation (70) et la contrebutée (82).

9. Dispositif de maintien axial et de mise en rotation selon l'une des revendications 1 à 8, dans lequel l'étrier comporte un alésage (46.3) réalisé entre les premier (Y) et deuxième (Y1) axes orthogonaux, un moyeu (52) monté articulé dans ledit alésage (46.3) autour d'une axe (U2) parallèle aux premier (Y) et deuxième (Y1) axes orthogonaux, un roulement (50) monté dans ledit moyeu (52), le poussoir (32) étant monté dans ledit roulement (50).

10. Installation de soudage pour le soudage des bouchons supérieurs (10) sur les crayons (6) de combustible nucléaire comportant un dispositif de maintien axial et de mise en rotation selon l'une des revendications 1 à 9 et une chambre de soudage (C), les crayons (6) formant les éléments allongés, ledit dispositif comportant un logement (14) traversant d'axe longitudinal (X) dans lequel le crayon (6) est destiné à être maintenu axialement par serrage et à pivoter autour de son axe, ladite chambre de soudage (C) étant disposée à une extrémité (18) du passage (14) traversant à l'opposé de l'extrémité d'introduction (16) du crayon, l'extrémité du crayon (6) munie du bouchon (10) débouchant dudit passage (14) dans une zone de soudage de ladite chambre de soudage (C), ladite chambre de soudage (C) comportant des moyens de soudage (106) du bouchon supérieur (10) sur le crayon (6).

11. Installation de soudage selon la revendication 10, dans laquelle la chambre de soudage comporte une butée (112) pour le bouchon supérieur (10) du crayon (6) alignée avec l'axe longitudinal (X) du dispositif.

12. Installation de soudage selon la revendication 10 ou 11, dans laquelle la chambre de soudage (C) comporte des moyens de mise au vide et d'injection d'un gaz inerte et d'analyse de l'atmosphère de ladite chambre, et un canal fluidique (114) reliant les moyens de mise au vide et d'injection à la zone de soudage.

13. Installation de soudage selon les revendications 11 et 12, dans laquelle la butée (112) est percée d'un canal longitudinal, le canal fluidique (114) étant relié à la zone de soudage à travers le canal longitudinal de la butée (112), le canal fluidique (114) étant avantageusement formé par un tube (116) solidaire en rotation de la butée (112), ledit tube (116) étant monté dans des paliers, et la butée (112) étant entraînée en rotation par le crayon (6).

14. Installation de soudage selon l'une des revendications 10 à 13, comportant des moyens de contrôle pour autoriser ou non le soudage en fonction de la vitesse de rotation du crayon et/ou de la qualité de l'atmosphère et/ou du niveau de serrage et/ou et de la position des moyens de soudage par rapport au plan de joint.

15. Procédé de soudage mettant en oeuvre l'installation selon l'une des revendications 10 à 14 comportant les étapes :
- insertion du crayon (6) muni du bouchon supérieur (10) dans le passage (14) du dispositif jusqu'à ce que le bouchon supérieur (10) vienne en appui contre la butée (112) de la chambre de soudage (C),
- actionnement des moyens de serrage du crayon,
- mise en rotation du crayon (6),
- mise au vide de la zone de soudage,
- injection de gaz inerte,
- soudage.

16. Procédé de soudage selon la revendication 15, dans lequel préalablement au soudage, la vitesse de rotation du crayon et/ou la qualité de l'atmosphère et/ou le niveau de serrage et/ou et la position des moyens de soudage par rapport au plan de joint sont vérifiés.

## Patentansprüche

1. Vorrichtung zum axialen Halten und zum In-Drehung-Versetzen eines länglichen Elements (6) mit longitudinaler Achse (X1) um seine Achse, wobei die Vorrichtung mit longitudinaler Achse (X) umfaßt:
- Mittel (22), die dazu ausgelegt sind, radiale Spannkräfte auf den Umfang des länglichen Elements (6) mit einer Orientierung hin zur longitudinalen Achse (X) durch Annäherung der Mittel (22) an die longitudinale Achse (X) auszuüben,
- Mittel zum Bewirken der Annäherung der Mittel (22), die dazu ausgelegt sind, die radialen Spannkräfte auszuüben, wobei die Mittel einen Drücker (32) zum Ausüben einer axialen Kraft auf die Mittel (22) umfassen, die dazu ausgelegt sind, radiale Spannkräfte auszuüben, ferner einen Gegenanschlag (26), um die Mittel (22), die dazu ausgelegt sind, radiale Spannkräfte auszuüben, dazu zu zwingen, sich unter der Einwirkung der axialen Kraft an die longitudinale Achse (X) anzunähern, ferner einen Linearbetätiger (44) mit einer Achse (X2) parallel zur longitudinalen Achse der Vorrichtung (X), ferner einen Bügel (46), der zur Translation mit dem Drücker (32) verbunden und drehbeweglich um eine erste Achse (Y) ist, die orthogonal zur longitudinalen Achse (X) ist und diese nicht schneidet, wobei die erste orthogonale Achse (Y) fest ist, wobei der Bügel (46) bezüglich des Linearbetätigers (44) drehbar um eine zur ersten orthogonalen Achse (Y) parallele zweite orthogonale Achse (Y1) gelagert ist, die der ersten orthogonalen Achse (Y) bezüglich der longitudinalen Achse (X) entgegengesetzt angeordnet ist, derart, dass der Linearbetätiger (44) eine Drehung des Bügels (46) um die erste orthogonale Achse (Y) bewirkt, und ferner Mittel zum Steuern des Linearbetätigers als Funktion der Position des Bügels (46), wobei der Drücker (32) in dem Bügel (46) drehbar ist,
- Mittel (96) zum Drehantrieb der Mittel (22), die dazu ausgelegt sind, radiale Spannkräfte auf den Umfang des länglichen Elements (6) auszuüben, und des Drückers (32).

2. Vorrichtung zum axialen Halten und zum In-Drehung-Versetzen nach Anspruch 1, umfassend:
- eine Hohlwelle (15) mit longitudinaler Achse (X), in der der Drücker (32) zur freien Translation montiert ist, wobei der Drücker mit der Welle (15) zur Drehung verbunden ist,
- Lager, in denen die Welle (15) montiert ist,
- die Mittel (96) zum Drehantrieb der Mittel (22), die dazu ausgelegt sind, radiale Spannkräfte auf den Umfang des länglichen Elements auszuüben, und des Drückers (32), zum direkten Drehantrieb der Welle (15).

3. Vorrichtung zum axialen Halten und zum In-Drehung-Versetzen nach Anspruch 1 oder 2, bei der die Mittel zur Steuerung des Betätigers wenigstens einen ersten Sensor (92, 94) zum Erfassen der Position des Bügels (46) in der gespannten Position umfassen, und vorzugsweise einen zweiten Sensor (64) zum Erfassen der entspannten Position.

4. Vorrichtung zum axialen Halten und zum In-Drehung-Versetzen nach Anspruch 3, bei der die Mittel zur Steuerung ein Metallteil (90) umfassen, das zur Bewegung mit dem Bügel (46) verbunden ist, und bei der der Sensor (92) ein induktiver Sensor (92) ist, wobei die Erfassung des Vorhandenseins des Metallteils (90) durch den Sensor einer gespannten Position entspricht.

5. Vorrichtung zum axialen Halten und zum In-Drehung-Versetzen nach einem der Ansprüche 1 bis 4, bei der der Linearbetätiger (44) ein pneumatischer Zylinder ist, wobei die Vorrichtung ferner eine Axialkraftübertragungswelle (68) umfaßt, die den Zylinder (44) und den Bügel (46) verbindet, wobei ein Gelenk (70) zwischen der Axialkraftübertragungswelle (68) und dem Bügel (46) ein Kardangelenk (72) umfaßt, das an dem Bügel (46) um die zweite orthogonale Achse (Y1) drehbar gelagert montiert ist, wobei das Kardangelenk (72) von der Axialkraftübertragungswelle (68) durchsetzt wird, wobei die Welle (68) mit dem Kardangelenk (72) verbunden ist.

6. Vorrichtung zum axialen Halten und zum In-Drehung-Versetzen nach Anspruch 5, umfassend elastische Mittel (76), die in Kompression zwischen dem Kardangelenk (72) und einem freien Ende der Welle (68) montiert sind, sowie vorzugsweise Mittel zur Regelung der Last der elastischen Mittel (76).

7. Vorrichtung zum axialen Halten und zum In-Drehung-Versetzen nach einem der Ansprüche 1 bis 6, umfassend mechanische Anschlagmittel (80) zum Begrenzen der Winkelverlagerung des Bügels (46), wobei die mechanischen Anschlagmittel (80) vorzugsweise wenigstens einen Anschlag (86) umfassen, der an dem freien Ende der Axialkraftübertragungswelle (68) montiert ist, sowie einen festen Gegenanschlag (82), wobei die Axialkraftübertragungswelle (68) den festen Gegenanschlag (82) durchsetzt, und wobei der Anschlag (86) auf der anderen Seite des Gegenanschlags (82) bezogen auf das Gelenk (70) zwischen dem Bügel (46) und der Axialkraftübertragungswelle (68) angeordnet ist.

8. Vorrichtung zum axialen Halten und zum In-Drehung-Versetzen nach Anspruch 7, umfassend einen zweiten Anschlag (78) an der Axialkraftübertragungswelle (68) zwischen dem Gelenk (70) und dem Gegenanschlag (82).

9. Vorrichtung zum axialen Halten und zum In-Drehung-Versetzen nach einem der Ansprüche 1 bis 8, bei der der Bügel eine Bohrung (46.3) umfaßt, die zwischen der ersten (Y) und der zweiten (Y1) orthogonalen Achse vorgesehen ist, ferner eine Nabe (52), die in der Bohrung (46.3) drehbar um eine Achse (U2) gelagert montiert ist, welche parallel zur ersten (Y) und zur zweiten (Y1) Achse ist, ferner ein in der Nabe (52) montiertes Lager (50), wobei der Drücker (32) in dem Lager (50) montiert ist.

10. Schweißanlage zum Schweißen von oberen Stopfen (10) an Kernbrennstäben (6), umfassend eine Vorrichtung zum axialen Halten und zum In-Drehung-Versetzen nach einem der Ansprüche 1 bis 9 sowie eine Schweißkammer (C), wobei die Stäbe (6) die länglichen Elemente bilden, wobei die Vorrichtung eine hindurchlaufende Aufnahme (14) mit longitudinaler Achse (X) umfaßt, in der der Stab (6) durch Spannen axial gehalten und um seine Achse schwenken soll, wobei die Schweißkammer (C) an einem Ende (18) der hindurchlaufenden Passage (14) gegenüber dem Ende zum Einführen (16) des Stabs angeordnet ist, wobei das mit dem Stopfen (10) ausgestattete Ende des Stabs (6) von der Passage (14) in eine Schweißzone der Schweißkammer (C) mündet, wobei die Schweißkammer (C) Mittel zum Schweißen (106) des oberen Stopfens (10) an den Stab (6) umfaßt.

11. Schweißanlage nach Anspruch 10, bei der die Schweißkammer einen Anschlag (112) für den oberen Stopfen (10) des Stabs (6) umfaßt, der mit der longitudinalen Achse (X) der Vorrichtung ausgerichtet ist.

12. Schweißanlage nach Anspruch 10 oder 11, bei der die Schweißkammer (C) Mittel zum Evakuieren und zum Injizieren eines Inertgases und zur Analyse der Atmosphäre der Kammer umfaßt, sowie einen Fluidkanal (114), der die Evakuierungs- und Injektionsmittel mit der Schweißzone verbindet.

13. Schweißanlage nach den Ansprüchen 11 und 12, bei der ein longitudinaler Kanal in den Anschlag (112) gebohrt ist, wobei der Fluidkanal (114) durch den longitudinalen Kanal des Anschlags (112) mit der Schweißzone verbunden ist, wobei der Fluidkanal (114) vorzugsweise durch ein Rohr (116) gebildet ist, das zur Drehung mit dem Anschlag (112) verbunden ist, wobei das Rohr (116) in Lagern montiert ist, und wobei der Anschlag (112) zur Drehung durch den Stab (6) angetrieben wird.

14. Schweißanlage nach einem der Ansprüche 10 bis 13, umfassend Steuerungsmittel, um das Schweißen als Funktion der Drehgeschwindigkeit des Stabs und/oder der Qualität der Atmosphäre und/oder des Spannniveaus und/oder der Position der Schweißmittel bezüglich der Verbindungsebene wohl oder nicht zuzulassen.

15. Verfahren zum Schweißen unter Verwendung der Anlage nach einem der Ansprüche 10 bis 14, umfassend die Schritte:
- Einsetzen des Stabs (6), der mit dem oberen Stopfen (10) ausgestattet ist, in die Passage (14) der Vorrichtung, bis der obere Stopfen (10) in Anlage gegen den Anschlag (112) der Schweißkammer (C) gelangt,
- Betätigen der Mittel zum Einspannen des Stabs,
- In-Drehung-Versetzen des Stabs (6),
- Evakuieren der Schweißzone,
- Injektion des Inertgases,
- Schweißen.

16. Verfahren zum Schweißen nach Anspruch 15, bei der vor dem Schweißen die Drehgeschwindigkeit des Stabs und/oder die Qualität der Atmosphäre und/oder das Spannniveau und/oder die Position der Schweißmittel bezüglich der Verbindungsebene überprüft werden.

## Claims

1. A device for axially holding an element of elongate shape (6) of lengthways axis (X1) and for setting it in rotation around it axis, said device of lengthways axis (X) comprising:
- means (22) able to exert radial tightening forces on the periphery of said elongate element (6) aligned towards the lengthways axis (X), by bringing said means (22) close to said lengthways axis (X),
- means to cause said means (22) able to exert said radial tightening forces closer to one another, said means comprisinga pusher (32) to apply an axial force on to said means (22) able to exert radial tightening forces, a counter thrust bearing (26) to force said means (22) able to exert radial tightening forces to come closer to the lengthways axis (X) under the effect of the axial force, a linear actuator (44) of axis (X2) parallel to the lengthways axis of the device (X), a yoke (46) which is translationally secured to said pusher (32) and able to rotate around a first axis (Y) orthogonal to lengthways axis (X) and not secant with it, said first orthogonal axis (Y) being fixed, said yoke (46) being hinged to the linear actuator (44) around a second orthogonal axis (Y1) parallel to the first orthogonal axis (Y) located opposite the first orthogonal axis (Y) relative to the lengthways axis (X), such that the linear actuator (44) causes the yoke (46) to rotate around the first orthogonal axis (Y) and means to control the linear actuator according to the position of the yoke (46), said pusher (32) being able to rotate freely in said yoke (46),
- means (96) to cause rotation of the means (22) able to exert radial tightening forces on the periphery of said elongate element (6) and said pusher (32).

2. A device for axial holding and for setting in rotation according to claim 1, comprising:
- a hollow shaft (15) of lengthways axis (X) in which said pusher (32) is installed such that it can slide freely, where said pusher is rotationally secured to said shaft (15),
- bearings in which the shaft (15) is mounted,
- means (96) to cause rotation of the means (22) able to exert radial tightening forces on the periphery of said elongate element and said pusher (32), directly causing rotation of said shaft (15).

3. A device for axial holding and setting in rotation according to claim 1 or 2, in which the means to control the actuator comprise at least one sensor (92, 94) to detect the position of the yoke (46) in the tightened position, and advantageously a second sensor (64) to detect the untightened position.

4. A device for axial holding and setting in rotation according to claim 3, in which the control means comprise a metal part (90) rigidly connected to the yoke (46), and in which said sensor (92) is an inductive sensor (92), and where the detection of the presence of said metal part (90) by said sensor corresponds to a tightened position.

5. A device for axial holding and setting in rotation according to one of the claims 1 to 4, in which the linear actuator (44) is a pneumatic jack, said device also comprising an axial force transmission shaft (68) connecting the jack (44) and the yoke (46), a hinge (70) between said axial force transmission shaft (68) and said yoke (46) comprising a universal joint (72) hinge to the yoke (46) around the second orthogonal axis (Y1), said universal joint (72) being traversed by said axial force transmission shaft (68), and said shaft (68) being connected to said universal joint (72).

6. A device for axial holding and setting in rotation according to claim 5, comprising elastic means (76) installed compressed between said universal joint (72) and a free end of said shaft (68), and advantageously means for adjusting the load of said elastic means (76).

7. A device for axial holding and setting in rotation according to one of the claims 1 to 6, comprising mechanical stop means (80) to limit the angular displacement of the yoke (46), said mechanical stop means (80) advantageously comprising at least one stop (86) installed on the free end of the axial force transmission shaft (68) and an immobile counter thrust bearing (82), said axial force transmission shaft (68) traverses the immobile counter thrust bearing (82), and said stop (86) is positioned on the other side of the counter thrust bearing (82) relative to the hinge (70) between the yoke (46) and the axial force transmission shaft (68).

8. A device for axial holding and setting in rotation according to claim 7, comprising a second stop (78) on the axial force transmission shaft (68) between the hinge (70) and the counter thrust bearing (82).

9. A device for axial holding and setting in rotation according to one of the claims 1 to 8, in which the yoke comprises a bore (46.3) made between the first (Y) and second (Y1) orthogonal axes, a hub (52) installed such that it is hinged in said bore (46.3) around an axis (U2) parallel to the first (Y) and second (Y1) orthogonal axes, and a rolling bearing (50) installed in said hub (52), the pusher (32) being installed in said rolling bearing (50).

10. A welding installation for welding the top plugs (10) on the nuclear fuel rods (6), comprising a device for axial holding and setting in rotation according to one of the claims 1 to 9, and a weld chamber (C), the rods (6) forming elongate elements, said device comprising a through recess (14) of lengthways axis (X) in which the rod (6) is intended to be held axially by tightening, and to pivot around its axis, said weld chamber (C) being positioned at one end (18) of the through passage (14) opposite the end (16) the rod being introduced, the end of the rod (6) fitted with the plug (10) emerging from said passage (14) in a welding area of said weld chamber (C), and said weld chamber (C) comprising means (106) of welding the top plug (10) on the rod (6).

11. A welding installation according to claim 10, in which the welding chamber comprises a stop (112) for the top plug (10) of the rod (6) aligned with the lengthways axis (X) of the device.

12. A welding installation according to claim 10 or 11, in which the weld chamber (C) comprises means to create a vacuum and to inject an inert gas, and to analyse the atmosphere of said chamber, and a fluid channel (114) connecting the means to create a vacuum and to inject in the welding area.

13. A welding installation according to the claims 11 and 12, in which the stop (112) is pierced with a lengthways channel, where the fluid channel (114) is connected to the welding area through the lengthways channel of the stop (112), the fluid channel (114) being advantageously formed by a tube (116) rotationally secured to the stop (112), where said tube (116) is installed in bearings, and where the stop (112) is rotated by the rod (6).

14. A welding installation according to one of the claims 10 to 13 comprising checking means to give or refuse authorisation to weld in accordance with the speed of rotation of the rod and/or the quality of the atmosphere and/or the level of tightening and/or the position of the welding means relative to the mating surface.

15. A welding method implementing the installation according to one of the claims 10 to 14 comprising the following steps:
- insertion of the rod (6) fitted with the top plug (10) into the passage (14) of the device, until the top plug (10) comes to rest against the stop (112) of the weld chamber (C),
- operation of the rod tightening means,
- setting the rod (6) in rotation,
- generation of a vacuum in the welding area,
- injection of inert gas,
- welding.

16. A welding method according to claim 15, in which, prior to welding, the speed of rotation of the rod and/or the quality of the atmosphere and/or the tightening level and/or the position of the welding means relative to the mating surface are checked.
